(19) **Europäisches Patentamt**

**European Patent Office**

**Office européen des brevets**

(11) Publication number: **0 348 514**
**A1**

(12) # EUROPEAN PATENT APPLICATION

published in accordance with Art. 158(3) EPC

(21) Application number: 88910107.7

(22) Date of filing: 19.11.88

Data of the international application taken as a basis:

(86) International application number:
**PCT/JP 88/01177**

(87) International publication number:
**WO 89/06003 (29.06.89 89/14)**

(30) Priority: **18.12.87 JP 321114/87**

(43) Date of publication of application: **03.01.90**
**Bulletin 90/1**

(84) Designated Contracting States: **DE FR GB**

(51) Int. Cl.⁴: **G 05 B 19/04**

(71) Applicant: **FANUC LTD., 3580, Shibokusa Aza-Komamba Oshino-mura, Minamitsuru-gun, Yamanashi 401-05 (JP)**

(72) Inventor: **YAMAUCHI, Takashi Fanuc Mansion Harimomi 6-202, 3537-1, Shibokusa Oshinomura, Minamitsuru-gun Yamanashi 401-05 (JP)**

(74) Representative: **Brunner, Michael John et al, GILL JENNINGS & EVERY 53-64 Chancery Lane, London WC2A 1HN (GB)**

(54) **SMALL PROGRAM PREPARATION APPARATUS FOR PC.**

(57) A small program preparation apparatus for PC (programmable controller) to which a memory card (30) is connected to store a sequence program: a sequence program is transferred to and from the memory card (30).

EP 0 348 514 A1

-1-

DESCRIPTION

COMPACT PROGRAM CREATION APPARATUS

FOR PROGRAMMABLE CONTROLLER

TECHNICAL FIELD

The present invention relates to a compact program creation apparatus for a programmable controller (PC), and more specifically, to a compact program creation apparatus for a programmable controller capable of controlling a memory card as an external memory unit for a sequence program.

BACKGROUND ART

Conventionally, a compact program creation apparatus for a PC mounted thereon or a hand-held compact program creation apparatus is used. This compact program creation apparatus for a PC is connected to an audio cassette recorder as an external memory unit, to record a sequence program stored in a PC main body on a cassette tape and transmit the sequence program in the cassette tape to the PC main body.

Since, however, the audio cassette recorder is used as the external memory unit, the transmission of the sequence program takes a long time and further, the program creation apparatus does not have a high

-2-

reliability or resistance to environment extremes.

On the other hand, the improvements in semiconductor technology have enabled a memory to be made smaller but with a larger capacity, and thus a memory card having a capacity sufficient for storing a sequence program can be practically used.

## DISCLOSURE OF THE INVENTION

Taking the above into consideration, an object of the present invention is to provide a compact program creation apparatus for a PC capable of controlling a memory card as an external memory unit for a sequence program.

To solve the above problems, according to the present invention, there is provided a compact program creation apparatus for a PC (programmable controller), comprising:

a mounting means for mounting and removing a memory card;

a means for transmitting a sequence program stored in a PC main body to said memory card and storing the sequence program therein; and

a means for transmitting said sequence program stored in said memory card to said PC main body.

Since the compact program creation apparatus for a PC includes an interface circuit, the sequence program in the PC main body can be transmitted to the memory card and stored therein by mounting the memory card to the apparatus.

Further, the sequence program stored in the memory card can be transmitted to the PC main body.

## BRIEF DESCRIPTION OF THE DRAWINGS

FIG. 1 is a circuit arrangement of an embodiment of a compact program creation apparatus for a PC according to the present invention; and

FIG. 2 is a perspective view of a compact program creation apparatus for a PC and a memory card.

## BEST MODE OF CARRYING OUT THE INVENTION

An embodiment of the present invention will be hereinafter described with reference to the drawings.

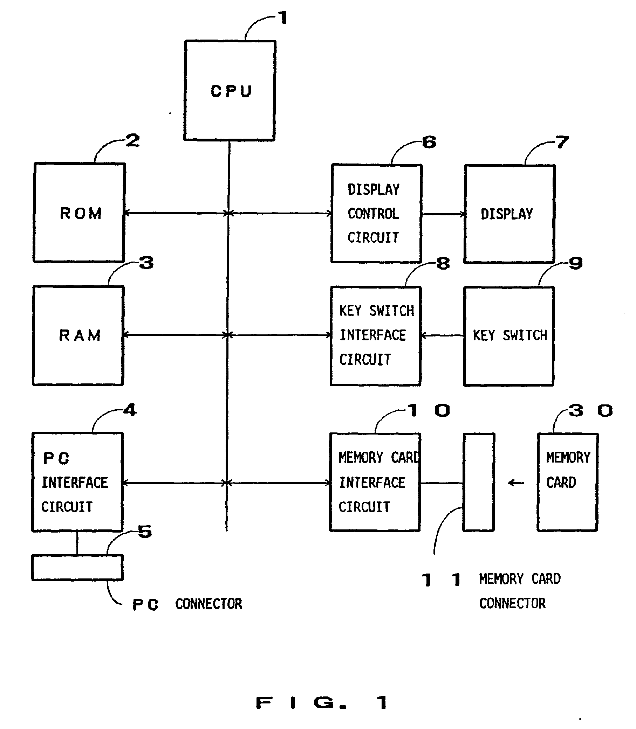

FIG. 1 is a circuit arrangement of an embodiment of a compact program creation apparatus for a PC according to the present invention, wherein 1 designates a processor for controlling a compact program creation apparatus for a PC as a whole, 2 designates a ROM for storing a control program and the like, and 3 designates a RAM for storing various data. A part of the RAM may be backed up by a battery and made non-volatile.

Also in FIG. 1, 4 designates an interface circuit for connecting the compact program creation apparatus for a PC to a PC main body, 5 designates a PC connector to be connected to the PC main body, and 6 designates a display control circuit to which a display

-4-

7 is connected. A liquid crystal device or the like is used as the display 7 which can display the content of a sequence program and the like. Designated at 8 is a key switch interface circuit to which a key switch 9 is connected; and designated at 10 is a memory card interface circuit including a memory card connector 11 to which a memory card 30 can be mounted.

The compact program creation apparatus for a PC is connected to the PC main body, the sequence program stored in the PC main body is transmitted to the memory card 30, and the program can be then stored in the memory card 30. Conversely, the sequence program in the memory card 30 can be transmitted to the PC main body, and the PC main body operated by the sequence program.

The memory card 30 is formed in a card shape, and a CMOS RAM backed up by a battery or an EEPROM is used as a memory thereof.

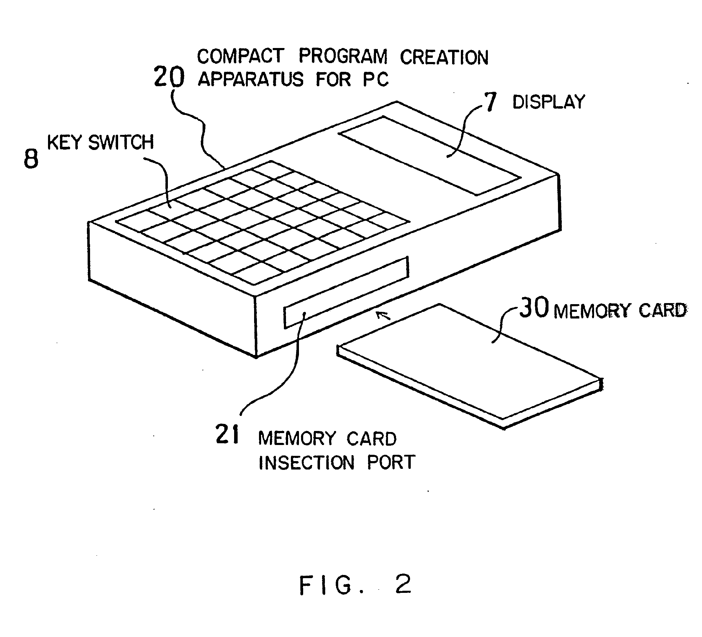

FIG. 2 is a perspective view of the compact program creation apparatus for a PC and the memory card, wherein 20 designates the compact program creation apparatus for a PC provided with the display 7, the key switch 8 and a memory card insertion port 21, and 30 designates the memory card. The memory card 30 is inserted into the memory card insertion port 21 of the compact program creation apparatus for a PC 20 to transmit the sequence program in the memory card 30 to the PC main body, and conversely, transmit the sequence program

-5-

from the PC main body to the memory card 30.

As described above, according to the present invention, since a memory card interface circuit is provided with a compact program creation apparatus and a memory card is used as an external memory unit for a sequence program, the storing of the sequence program and the loading thereof to a PC main body can be easily carried out at a high speed.

## CLAIM

1. A compact program creation apparatus for a PC (programmable controller), comprising:

a mounting means for mounting and removing a memory card;

a means for transmitting a sequence program stored in a PC main body to said memory card and storing said sequence program therein; and

a means for transmitting said sequence program stored in said memory card to said PC main body.

F I G. 1

COMPACT PROGRAM CREATION
20 APPARATUS FOR PC

7 DISPLAY

8 KEY SWITCH

30 MEMORY CARD

21 MEMORY CARD
INSECTION PORT

FIG. 2

# INTERNATIONAL SEARCH REPORT

International Application No PCT/JP 88/01177

**I. CLASSIFICATION OF SUBJECT MATTER** (if several classification symbols apply, indicate all) ⁶

According to International Patent Classification (IPC) or to both National Classification and IPC

Int. Cl⁴    G05B19/04

**II. FIELDS SEARCHED**

Minimum Documentation Searched ⁷

| Classification System | Classification Symbols |
|---|---|
| IPC | G05B19/04 |

Documentation Searched other than Minimum Documentation
to the Extent that such Documents are Included in the Fields Searched ⁸

Jitsuyo Shinan Koho            1932 - 1988
Kokai Jitsuyo Shinan Koho      1971 - 1988

**III. DOCUMENTS CONSIDERED TO BE RELEVANT** ⁹

| Category * · | Citation of Document, ¹¹ with indication, where appropriate, of the relevant passages ¹² | Relevant to Claim No. ¹³ |
|---|---|---|
| Y | JP, A, 55-88102 (Omron Tateisi Electronics Co.) 3 July 1980 (03. 07. 80) (Family: none) | 1 |
| Y | JP, A, 57-206966 (Toyota Motor Corporation) 18 December 1982 (18. 12. 82) (Family: none) | 1 |
| Y | JP, A, 57-69411 (Toshiba Machine Co., Ltd.) 28 April 1982 (28. 04. 82) (Family: none) | 1 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 31, 1989 (31. 01. 89) | February 20, 1989 (20. 02. 89) |

| International Searching Authority | Signature of Authorized Officer |
|---|---|
| Japanese Patent Office | |

Form PCT ISA 210 (second sheet) (January 1985)